# EUROPEAN PATENT SPECIFICATION

(11) **EP 1 784 630 B1**
(45) Date of publication and mention of the grant of the patent: **30.05.2018**
(21) Application number: 05794052.0
(22) Date of filing: 01.09.2005
(51) Int. Cl.: G01N 15/14

(54) **FREQUENCY-MULTIPLEXED DETECTION OF MULTIPLE WAVELENGTH LIGHT FOR FLOW CYTOMETRY**
FREQUENZ-AUFGELÖSTE DETEKTION VON LICHT MEHRERER WELLENLÄNGEN FÜR DURCHFLUSSZYTOMETRIE
DETECTION MULTIPLEXEE EN FREQUENCE DE LUMIERE PRESENTANT PLUSIEURS LONGUEURS D'ONDES POUR UNE CYTOMETRIE D'ECOULEMENT(EN) FREQUENCY-MULTIPLEXED DETECTION OF MULTIPLE WAVELENGTH LIGHT FOR FLOW CYTOMETRY

(30) Priority: 01.09.2004 US 931686
(43) Date of publication of application: 16.05.2007
(73) Proprietor: Honeywell International Inc., Morris Plains, NJ 07950 (US)
(72) Inventor: COX, James, A., New Brighton, MN 55113 (US); ZOOK, David, J., Golden Valley, MN 55422 (US)
(74) Representative: Houghton, Mark Phillip
(86) International application number: PCT/US2005/031493
(87) International publication number: WO 2006/026766

(56) References cited:
- EP-A- 1 491 877
- EP-A2- 0 281 077
- WO-A-2005/026673
- GB-A- 1 237 547
- GB-A- 2 212 261
- US-A- 4 817 101
- US-A- 4 953 978
- US-A- 4 957 363
- US-A- 5 250 810
- US-A1- 2003 030 783
- US-A1- 2003 054 558
- US-A1- 2004 036 874
- DOBBS M ET AL: "Validation of design for space-based tunable diode laser absorption spectroscopy payload" PROCEEDINGS OF THE SPIE, SPIE, BELLINGHAM, VA, US, vol. 4817, 2002, pages 123-128, XP002293888 ISSN: 0277-786X

## Description

### Background

This invention pertains to cytometers and particularly to optical systems of cytometers. More particularly, the invention pertains to the optical acquisition of information about microscopic particles or components in a flow stream of a cytometer.

This invention is related to U.S. Patent Application Serial No. 10/225,325, by Bernard Fritz et al., filed August 21, 2002, and entitled "Optical Alignment Detection System"; and the invention is related to U.S. Patent Application Serial No. 10/304,773, to Aravind Padmanabhan et al., filed November 26, 2002, and entitled "Portable Scattering and Fluorescence Cytometer". This invention also is related to U.S. Patent No. 6,549,275 B1, by Cabuz et al., issued April 15, 2003, and entitled "Optical Detection System for Flow Cytometry"; U.S. Patent No. 6,597,438 B1, by Cabuz et al., issued July 22, 2003, and entitled "Portable Flow Cytometer"; U.S. Patent No. 6,382,228 B1, by Cabuz et al., issued May 7, 2002, and entitled "Fluid Driving System for Flow Cytometry"; U.S. Patent No. 6,700,130 B2, issued March 2, 2004, by Fritz, and entitled "Optical Detection System for Flow Cytometry"; and U.S. Patent No. 6,240,944 B1, by Ohnstein et al., issued June 5, 2001, and entitled "Addressable Valve Arrays for Proportional Pressure or Flow Control". The term "fluid" may be used herein as a generic term that includes gases and liquids as species. For instance, air, gas, water and oil are fluids.

Patent document number US4957363A describes a particle measuring apparatus for measuring characteristics of particles by detecting light scattered at the particles while irradiating the particles in fluid with light. The scattered light is detected by means of a plurality of detectors and the characteristics of particles are determined by using pulse signals of detection signals coming from the plurality of detectors, which are coincident with each other.

Patent document number EP1491877A1 describes a material sensing system comprising a first optical radiation source tunable over a range of wavelengths; a second optical radiation source at a fixed reference wavelength; two modulators to modulate the two optical radiations at different frequencies to generate two different modulated optical radiations and a detector to detect both modulated optical radiations after interaction with sample and generate a detection signal. The system also includes two lock-in amplifiers to process the detection signal based on the first and second frequencies to produce two output signals.

Patent document number US2003/054558A1 describes gas focusing flow cytometers which are fabricatable employing simple and inexpensive manufacturing techniques. When such cytometers or conventional cytometers are combined with fiber optical light paths and laser diode and semiconductor photodetectors, light weight and handheld, optionally disposable devices which maintain high performance are possible.

Patent document number US2004/036874A1 describes apparatus for detecting light scattered by a small particle (e.g., a blood cell) irradiated by a light beam. The apparatus comprises one or more photodetectors and a plurality of optical fibers that serve to optically couple the scattered light and the photodetector(s). To enhance the efficiency of such optical coupling, a portion of each of the optical fibers in the vicinity of its light-collecting end is supported so that its optical axis extends towards the light-scattering source. By this arrangement, scattered light enters each fiber from a direction substantially parallel to the fiber axis. Preferably, the light-collecting ends of the optical fibers are supported on a concave surface so that the respective optical axes of the fibers converge at a point representing the apparent position of the light-scattering source, taking into account the refractive effects of an optical flow cell through which scattering is detected.

Patent document number EP0281077A2 describes a photoelectric conversion sensor for measuring particle size or size distribution based on the light scattering phenomena with excellent precision and higher resolving power. The sensor has 8 or more arcuate photoelectric conversion elements each being defined by two concentric arcs with different radii and two radii are so arranged that the gaps in the radial direction between two adjacent elements can be substantially eliminated by shifting them in the circumferential direction.

### Summary

The present invention in its various aspects is as set out in the appended claims.

The invention is an optical system for a cytometer using a multiplexing scheme to detect light of various wavelengths to obtain information relative to the particles that the light is impinging in a flow channel of the cytometer.

### Brief Description of the Drawing

Figure 1 shows a multiplexed multiple wavelength light scattering system with a single detector; and
Figure 2 is a graph of light signals versus their respective modulation frequencies.
Figure 3 is a diagram of a cytometer as an illustrative example that may use the multiplexed multiple wavelength light scattering system.

### Description

Improved performance (i.e., accuracy, selectivity, reliability, and so on) is achieved by measuring optical scattering properties of a particle at multiple wavelengths. The invention provides a way to accomplish this measuring approach by using a single detector assembly for all wavelengths. Each wavelength light source is modulated at a unique frequency sufficiently separated from the other modulated sources to enable its signal to be demultiplexed unambiguously at the output of the detector. Light from all modulated sources scattered by the particle under measurement is collected on the same detector assembly.

With flow cytometry, improved differentiation and accuracy in counting and distinguishing multiple particle types (e.g., blood cells) may be achieved by performing multidimensional measurements, such as particle volume, scattering at various angles, and scattering in various wavelengths. The invention may reveal improvements to this optical interrogation technique (i.e., multi-wave scattering). Scattering at multiple wavelengths may be done at spatially separated locations along the flow channel. This may require careful synchronization in timing as well as multiple detector arrays and spectra filters. This difficulty may be avoided by the use of modulation frequency multiplexing of the various wavelength sources. Each source may be modulated at a unique and sufficiently high frequency to meet system bandwidth requirements. The sources may be folded into one optical input path and focused simultaneously onto the same particle location. The scattered light at the various wavelengths may then be collected onto the same detector array to determine the angular information, and the signals at the different wavelengths may be separated by temporally filtering (e.g., Fourier transform methods) the detector signals.

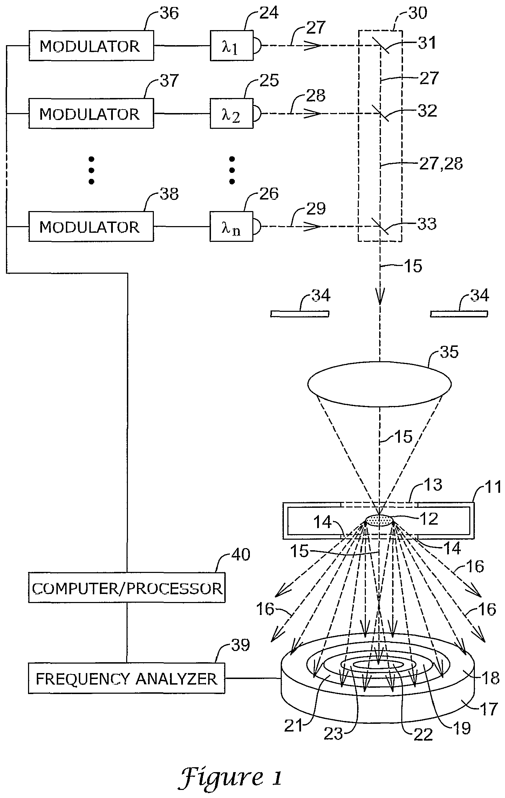

Figure 1 shows an illustrative example implementing the invention. This figure shows a cross-section view of a channel 11. Channel 11 is a flow or measurement channel of a cytometer having a core stream having particles 12 moving through channel 11.

The core stream with particles 12 may be looked at as flowing into the surface of the figure. Channel 11 may be lengthy. The core stream along with particles 12 is kept away from the inside surfaces of channel 11 with a sheathing fluid that surrounds the core stream. The location of the cross-section of channel 11 is where a light source and detector arrangement is be placed. Channel 11 has transparent windows 13 and 14 to facilitate the light source detector arrangement. A light beam 15 enters channel 11 through window 13, impinge a particle 12 which scatters beam 15 into light 16 which exits channel 11 through window 14. Light 16 is sensed by a detector 17. Detector 17 is an annular type having a ring of surf ace area 18 sensitive to light. The detector 17 is expanded with another ring of surface area 19 also sensitive to light 16. Light sensitive surfaces 18 and 19 are isolated from each other by an annular area 21 that is not sensitive to light. Also, detector 17 is further expanded with a central light-sensitive area 22 that is isolated from the light-sensitive annular area 19 by an annular area 23 that is not sensitive to light. The detector 17 may be expanded to include as many annular detectors, each subtending its own prescribed angular interval, as needed. The annular detectors or other kinds of detectors of an array of the detector provide electrical signals representing light impinging the detector at respective angles. That is, one electrical signal represents detected light of a first angle; another electrical signal represents detected light of a second angle; and so on.

Various kinds of information may be obtained about the particles 12 from the scattered light. First, a count of the particles 12 may be made with the successive interruption of the light beam 15 to detector 17. Other information about the size, shape, surface, and so on, about particles 12 may be obtained from scattered light that impinges detector 17. The magnitudes of the scattered light and the location of such light on detector 17 may be noted electronically from the signals from the various detector 17 surfaces. Another dimension of information may be obtained from the scattered light if the various wavelengths of the scattered light are known. Light 15 beams of various wavelengths may scatter differently from particles 12. That is, a light beam of one wavelength may scatter differently than a light beam of another wavelength for the same point of impingement of a particle, or even the same particle, in the same location. These differences of scattering may provide additional information about the particle.

To accomplish projecting a light beam 15 having various but identifiable frequencies of light is achieved with the present invention. Beam 15 is composed of light from a number (n) of light sources 24, 25 and 26. Light source 24 emits or emanates a light beam 27 having a wavelength λ₁. Light source 25 emanates a light beam 28 having a wavelength λ₂, and light source 26 emanates a beam 29 having a wavelength λₙ. Between light source 25 and light source 26 may be numerous similar light sources with light beams having different wavelengths, respectively.

Beam 27 propagates from source 24 to a component dichroic mirror 31 in a dichroic fold mirror assembly 30. Mirror 31 reflects at least a portion of beam 27 approximately 90 degrees towards channel 11. Beam 28 propagates to a dichroic mirror 32 of assembly 30. Mirror 32 deflects and/or reflect at least a portion of beam 28 approximately 90 degrees towards channel 11. Beam 29 propagates to a dichroic mirror 33 of assembly 30. Mirror 33 reflects at least a portion of beam 29 approximately 90 degrees towards channel 11. There may be additional beams and mirrors between beams 28 and 29 and between mirrors 32 and 33, respectively.

As beam 27 propagates toward channel 11, it, at least in part, goes through mirrors 32 and 33 and any additional mirrors between those mirrors. Likewise, as beam 28 propagates toward channel 11, it, at least in part, goes through mirror 33 and any mirrors between mirrors 32 and 33. A resultant beam 15, which includes beams 27, 28 and 29 and any beams reflected or deflected by other mirrors situated between mirrors 32 and 33 of assembly 30. Beam 15 proceeds through aperture 34, optics 35 and window 13 of channel 11.

Since beam 15 goes through window 13 of channel 11, impinge a particle 12 and be scattered as light beams 16 that go through window 14 to the detector 17, there is an interest to determine which wavelengths each of the light beams 16 has. The answer might not be evident in how to identify the wavelength or source of the reflected light in the electrical signals being output from detector 17.

To identify the wavelength of the detected light 16, scattered or unscattered, is achieved with modulation of the light from each of the sources. That is, a modulator 36 modulates the output of the light source 24 with a frequency f₁. Also, a modulator 37 modulates the output of light source 25 with a frequency f₂ and modulator 38 modulates the output of light source 26 with a frequency fₙ. Between modulators 37 and 38 there may be other modulators that modulate additional light sources ·of other wavelengths that may be situated between light sources 25 and 26. This approach may be regarded as a frequency multiplexing of the light sources. Modulators 36, 37, 38 and the other modulators are connected to and controlled by computer/processor 40.

The output of detector 17 goes to a frequency analyzer 39 which demultiplexes the detected light 16 and 15 signals and separate out the light into component signals according to their wavelengths and respective light sources. These signals are provided to the computer/processor 40 for analysis, counting, identification, recording and/or other actions.

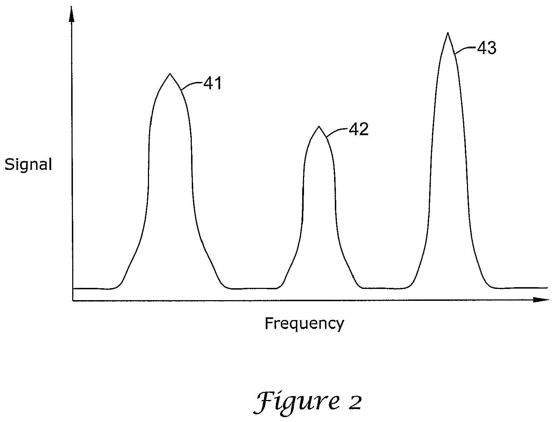

Modulation frequencies may be relatively high in comparison to signal frequencies. Figure 2 reveals a graph of the signals multiplexed according to frequency. As an illustrative example, a signal 41 is of the wavelength λ₁ multiplexed at 10.0 MHz, a signal 42 is of the wavelength λ₂ multiplexed at 10.3 MHz, and a signal 43 is of the wavelength λₙ multiplexed at 10.6 MHz. Additional signals of other wavelengths may be multiplexed at other frequencies for demultiplexing at the output of the detector 17.

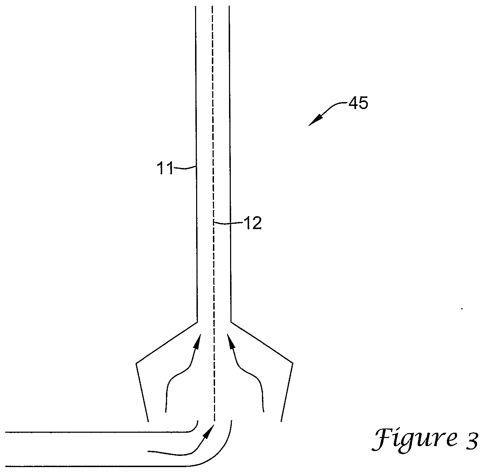

Figure 3 is a diagram of a cytometer 45 that incorporates an illustrative application of the multiplexed multiple wavelength light scattering system. Cytometer 45 has a channel 11 with a core stream of particles 12.

Although the invention has been described with respect to at least one illustrative embodiment, many variations and modifications will become apparent to those skilled in the art upon reading the present specification. It is therefore the intention that the appended claims be interpreted as broadly as possible in view of the prior art to include all such variations and modifications.
reflected light in the electrical signals being output from detector 17.

To identify the wavelength of the detected light 16, scattered or unscattered, may be achieved with modulation of the light from each of the sources. That is, a modulator 36 may modulate the output of the light source 24 with a frequency f₁. Also, a modulator 37 may modulate the output of light source 25 with a frequency f₂ and modulator 38 may modulate the output of light source 26 with a frequency fₙ. Between modulators 37 and 38 there may be other modulators that modulate additional light sources of other wavelengths that may be situated between light sources 25 and 26. This approach may be regarded as a frequency multiplexing of the light sources. Modulators 36, 37, 38 and the other modulators may be connected to and controlled by computer/processor 40.

The output of detector 17 goes to a frequency analyzer 39 which demultiplexes the detected light 16 and 15 signals and separates out the light into component signals according to their wavelengths and respective light sources. These signals are provided to the computer/processor 40 for analysis, counting, identification, recording and/or other actions.

Modulation frequencies may be relatively high in comparison to signal frequencies. Figure 2 reveals a graph of the signals multiplexed according to frequency. As an illustrative example, a signal 41 may be of the wavelength *λ*₁ multiplexed at 10.0 MHz, a signal 42 may be of the wavelength *λ*₂ multiplexed at 10.3 MHz, and a signal 43 may be of the wavelength *λ*ₙ multiplexed at 10.6 MHz. Additional signals of other wavelengths may be multiplexed at other frequencies for demultiplexing at the output of the detector 17.

Figure 3 is a diagram of a cytometer 45 that may incorporate an illustrative application of the multiplexed multiple wavelength light scattering system. Cytometer 45 may have a channel 11 with a core stream of particles 12.

Although the invention has been described with respect to at least one illustrative embodiment, many variations and modifications will become apparent to those skilled in the art upon reading the present specification.

## Claims

1. A multiple wavelength light system for optical flow cytometry systems comprising:
a plurality of light sources (24, 25, 26);
an at least one mirror (31, 32, 33) proximate to the plurality of light sources (24, 25, 26);
at least one multiplexer connected to the plurality of light sources (24, 25, 26);
a single detector (17) proximate to a target, the single detector comprising a central light sensitive area (22) and one or more annular light sensitive areas (18, 19) concentrically around the central light sensitive area (22); and
a demultiplexer connected to the signal detector (17), the demultiplexer separates out light from the plurality of light sources that is detected by the central light sensitive area and the one or more annular light sensitive areas of the single detector into component signals according to their respective wavelengths and light source;
a processor (40) connected to the at least one multiplexer and the demultiplexer, the processor receiving and analyzing the component signals from the demultiplexer,
wherein the central light sensitive area (22) and the one or more annular light sensitive areas (18, 19) are isolated from each other by an annular area that is not sensitive to light such that each of the central light sensitive area (22) and the one or more annular light sensitive areas (18, 19) subtends its own prescribed angle and provide an electrical signal representing light impinging the single detector (17) at respective angles.

2. The system of claim 1, wherein:
the at least one multiplexer is a frequency modulator (36, 37, 38).

3. The system of claim 1, wherein:
the at least one multiplexer is at least one frequency modulator (36, 37, 38) connected to each light source (24, 25, 26);
wherein the at least one mirror is at least one dichroic fold mirror (31, 32, 33) proximate to each light source (24, 25, 26), and an output of light (15) directed to a target; and
wherein the demultiplexer is a frequency analyzer (39) connected to the signal detector (17).

4. A method for identifying components of a detected light beam having different wavelengths for use with optical flow cytometry systems, comprising:
modulating with a first frequency a first light (27) having a first wavelength;
modulating with another frequency at least another light (28, 29) having another wavelength;
combining the light (27) having the first wavelength with the at least another light (28, 29) with the another wavelength into a light beam (15);
detecting the light beam (15) with a single detector (17) having a central light sensitive area (22) and one or more annular light sensitive areas (18, 19) concentrically around the central light sensitive area (22) that are separated from one another by an area that is not sensitive to light such that each of the central light sensitive area (22) and the one or more annular light sensitive areas (18, 19) subtends its own prescribed angle and converts the detected light into an electrical signal representing light impinging the single detector (17) at respective angles;-and
demultiplexing the electrical signal into signals representing light of the first wavelength and signals representing the at least another light having another wavelength; and
analyzing the signals representing light of the first wavelength and the signals representing the at least another light having another wavelength.

## Patentansprüche

1. Mehrfach-Wellenlängen-Lichtsystem für optische Durchflusszytometriesysteme, umfassend:
mehrere Lichtquellen (24, 25, 26);
mindestens einen Spiegel (31, 32, 33) in der Nähe der mehreren Lichtquellen (24, 25, 26);
mindestens einen Multiplexer, der mit den mehreren Lichtquellen (24, 25, 26) verbunden ist;
einen einzelnen Detektor (17) in der Nähe eines Ziels, wobei der einzelne Detektor einen zentralen lichtempfindlichen Bereich (22) und einen oder mehrere ringförmige lichtempfindliche Bereiche (18, 19) konzentrisch um den zentralen lichtempfindlichen Bereich (22) aufweist; und
einen Demultiplexer, der mit dem Signaldetektor (17) verbunden ist, wobei der Demultiplexer Licht aus den mehreren Lichtquellen, das von dem zentralen lichtempfindlichen Bereich und dem einen oder den mehreren ringförmigen lichtempfindlichen Bereichen des einzelnen Detektors detektiert wird, entsprechend ihrer jeweilige Wellenlängen und Lichtquelle in Komponentensignale trennt;
einen Prozessor (40), der mit dem mindestens einen Multiplexer und dem Demultiplexer verbunden ist, wobei der Prozessor die Komponentensignale von dem Demultiplexer empfängt und analysiert,
wobei der zentrale lichtempfindliche Bereich (22) und der eine oder die mehreren ringförmigen lichtempfindlichen Bereiche (18, 19) durch einen ringförmigen Bereich, der nicht lichtempfindlich ist, voneinander isoliert sind, so dass jeder von dem zentralen lichtempfindlichen Bereiche (22) und dem einen oder den mehreren ringförmigen lichtempfindlichen Bereichen (18, 19) seinem eigenen vorgeschriebenen Winkel gegenüberliegt und ein elektrisches Signal liefert, das Licht darstellt, das auf den einzelnen Detektor (17) unter jeweiligen Winkeln auftrifft.

2. System nach Anspruch 1, wobei:
der mindestens eine Multiplexer ein Frequenzmodulator (36, 37, 38) ist.

3. System nach Anspruch 1, wobei:
der mindestens eine Multiplexer mindestens ein Frequenzmodulator (36, 37, 38) ist, der mit jeder Lichtquelle (24, 25, 26) verbunden ist;
wobei der mindestens eine Spiegel mindestens ein dichroitischer Faltspiegel (31, 32, 33) in der Nähe jeder Lichtquelle (24, 25, 26) ist, und eine Ausgabe von Licht (15) auf ein Ziel gerichtet ist; und
wobei der Demultiplexer ein Frequenzanalysator (39) ist, der mit dem Signaldetektor (17) verbunden ist.

4. Verfahren zum Identifizieren von Komponenten eines detektierten Lichtstrahls mit unterschiedlichen Wellenlängen zur Verwendung mit optischen Durchflusszytometriesystemen, umfassend:
Modulieren eines ersten Lichts (27) mit einer ersten Wellenlänge mit einer ersten Frequenz;
Modulieren, mit einer anderen Frequenz, mindestens eines anderen Lichts (28, 29) mit einer anderen Wellenlänge;
Kombinieren des Lichts (27) mit der ersten Wellenlänge mit dem mindestens einem anderen Licht (28, 29) mit der anderen Wellenlänge in einen Lichtstrahl (15);
Erfassen des Lichtstrahls (15) mit einem einzigen Detektor (17), der einen zentralen lichtempfindlichen Bereich (22) und einen oder mehrere ringförmige lichtempfindliche Bereiche (18, 19) konzentrisch um den zentralen lichtempfindlichen Bereich (22) aufweist, die durch einen Bereich, der nicht lichtempfindlich ist, voneinander getrennt sind, so dass sowohl der zentrale lichtempfindliche Bereich (22) und der eine oder die mehreren ringförmigen lichtempfindlichen Bereiche (18, 19) ihrem eigenen vorgeschriebenen Winkel gegenüberliegen und das detektierte Licht in ein elektrisches Lichtsignal umwandeln, das Licht darstellt, das bei jeweiligen Winkeln auf den einzelnen Detektor (17) auftrifft;
Demultiplexen des elektrischen Signals in Signale, die Licht der ersten Wellenlänge darstellen, und Signale, die das mindestens ein anderes Licht mit einer anderen Wellenlänge darstellen; und Analysieren der Signale, die Licht der ersten Wellenlänge darstellen, und der Signale, die das mindestens eine andere Licht mit einer anderen Wellenlänge darstellen.

## Revendications

1. Système lumineux à multiples longueurs d'onde pour systèmes optiques de cytométrie en flux comprenant :
une pluralité de sources de lumière (24, 25, 26) ;
au moins un miroir (31, 32, 33) proche de la pluralité de sources de lumière (24, 25, 26) ;
au moins un multiplexeur relié à la pluralité de sources de lumière (24, 25, 26) ;
un unique détecteur (17) proche d'une cible, l'unique détecteur comprenant une zone centrale sensible à la lumière (22) et une ou plusieurs zones annulaires sensibles à la lumière (18, 19) concentriquement autour de la zone centrale sensible à la lumière (22) ; et
un démultiplexeur relié au détecteur de signal (17), le démultiplexeur séparant la lumière provenant de la pluralité de sources de lumière qui est détectée par la zone centrale sensible à la lumière et la ou les zones annulaires sensibles à la lumière de l'unique détecteur en signaux constitutifs en fonction de leurs longueurs d'onde et sources de lumière respectives ;
un processeur (40) relié à l'au moins un multiplexeur et au démultiplexeur, le processeur recevant et analysant les signaux constitutifs provenant du démultiplexeur,
dans lequel la zone centrale sensible à la lumière (22) et la ou les zones annulaires sensibles à la lumière (18, 19) sont isolées les unes des autres par une zone annulaire qui n'est pas sensible à la lumière de telle sorte que chaque zone parmi la zone centrale sensible à la lumière (22) et la ou les zones annulaires sensibles à la lumière (18, 19) sous-tend son propre angle prescrit et délivrent un signal électrique représentant la lumière frappant l'unique détecteur (17) à des angles respectifs.

2. Système de la revendication 1, dans lequel :
l'au moins un multiplexeur est un modulateur de fréquence (36, 37, 38) .

3. Système de la revendication 1, dans lequel :
l'au moins un multiplexeur est au moins un modulateur de fréquence (36, 37, 38) relié à chaque source de lumière (24, 25, 26) ;
dans lequel l'au moins un miroir est au moins un miroir dichroïque replié (31, 32, 33) proche de chaque source de lumière (24, 25, 26), et d'une sortie de lumière (15) dirigée vers une cible ; et
dans lequel le démultiplexeur est un analyseur de fréquence (39) relié au détecteur de signal (17).

4. Procédé d'identification de composantes d'un faisceau lumineux détecté ayant différentes longueurs d'onde pour utilisation avec des systèmes optiques de cytométrie en flux, comprenant les étapes suivantes :
moduler avec une première fréquence une première lumière (27) ayant une première longueur d'onde ;
moduler avec une autre fréquence au moins une autre lumière (28, 29) ayant une autre longueur d'onde ;
combiner la lumière (27) ayant la première longueur d'onde avec l'au moins une autre lumière (28, 29) avec l'autre longueur d'onde en un faisceau lumineux (15) ;
détecter le faisceau lumineux (15) avec un unique détecteur (17) ayant une zone centrale sensible à la lumière (22) et une ou plusieurs zones annulaires sensibles à la lumière (18, 19) concentriquement autour de la zone centrale sensible à la lumière (22) qui sont séparées les unes des autres par une zone qui n'est pas sensible à la lumière de telle sorte que chaque zone parmi la zone centrale sensible à la lumière (22) et la ou les zones annulaires sensibles à la lumière (18, 19) sous-tend son propre angle prescrit et convertit la lumière détectée en un signal électrique représentant la lumière frappant l'unique détecteur (17) à des angles respectifs ;
démultiplexer le signal électrique en signaux représentant la lumière de la première longueur d'onde et en signaux représentant l'au moins une autre lumière ayant une autre longueur d'onde ; et
analyser les signaux représentant la lumière de la première longueur d'onde et les signaux représentant l'au moins une autre lumière ayant une autre longueur d'onde.
